# EUROPEAN PATENT APPLICATION

(11) **EP 3 552 672 A1**
(43) Date of publication of application: **16.10.2019**
(21) Application number: 19167807.7
(22) Date of filing: 08.04.2019
(51) Int. Cl.: A62D 1/00, A62C 37/00, H01M 10/052, H01M 10/42

(54) **FIRE SUPPRESSION AGENT WITH VERMICULITE**

(30) Priority: 10.04.2018 US 201815949818
(71) Applicant: Kidde Graviner Limited, Slough, Berkshire SL3 0HB (GB)
(72) Inventor: CHATTAWAY, Adam, Windsor, Berkshire SL3 0HB (GB); DUNSTER, Robert G., Burnham, Berkshire SL1 6ER (GB)
(74) Representative: Dehns

(57) **Abstract**

A fire suppression agent suitable for suppressing a lithium battery fire includes a bicarbonate powder and exfoliated vermiculite particles blended with the bicarbonate powder.

## Description

### BACKGROUND

Ordinary dry chemical fire suppression agents are effective for fighting various classes of fires, such as class B (combustible liquids/gases) and class C (electrical) fires. These agents are not, however, useful for class A (combustible nonmetal solids) or lithium battery (considered a type of class B) fires. Lithium battery fires burn at extremely high temperatures, and can react violently with liquid and compressed gas agents. Therefore, extinguishing a lithium battery fire typically requires specially-developed chemical agents to smother and deprive the fire of oxygen, as well as absorb heat. These agents, however, may not be effective at fighting class A through C fires. Similarly, class A specific fire suppression agents, such as water and foam, may not be effective at fighting lithium battery, class B, or class C fires.

Commercial vehicles (e.g., buses, coaches, aircraft, etc.) can be at risk for multiple classes of fire, especially given the recent prevalence of lithium ion battery fires caused by personal electronic devices. Transportation regulations may require fire extinguishers and/or fixed fire systems throughout a vehicle, and they often contain different fire suppression agents based on the most likely type or types of fire in that space. A single fire suppression agent suitable for use with multiple classes of fire may be more effective and economical.

### SUMMARY

A fire suppression agent suitable for suppressing a lithium battery fire includes a bicarbonate powder and exfoliated vermiculite particles blended with the bicarbonate powder.

A fire suppression system includes a vessel, and a fire suppression agent contained within the vessel. The fire suppression agent includes a bicarbonate powder and exfoliated vermiculite particles, and is capable of suppressing a lithium battery fire.

A method of making a fire suppression agent suitable for suppressing a lithium battery fire includes combining an amount of exfoliated vermiculite particles and a bicarbonate powder.

### BRIEF DESCRIPTION OF THE DRAWINGS

FIG. 1 is simplified illustration of a fire suppression agent, and a system employing the fire suppression agent.
FIG. 2 is a simplified illustration of an alternative embodiment of a system employing the fire suppression agent.

### DETAILED DESCRIPTION

The present invention is directed to a hybrid fire suppression agent and a system employing the fire suppression agent. The fire suppression agent is a mixture of a dry chemical agent and vermiculite particles. Vermiculite is a naturally-occurring, mineral that, when raw, consists of thin flakes with microscopic layers of water. Raw vermiculite can be exfoliated to create expanded, lightweight particles that are highly absorbent and non-reactive. Vermiculite can be effective at extinguishing lithium battery fires, and can further make the hybrid agent effective at extinguishing class A fires. When combined with the dry chemical agent, the hybrid agent can be used to fight multiple classes of fires.

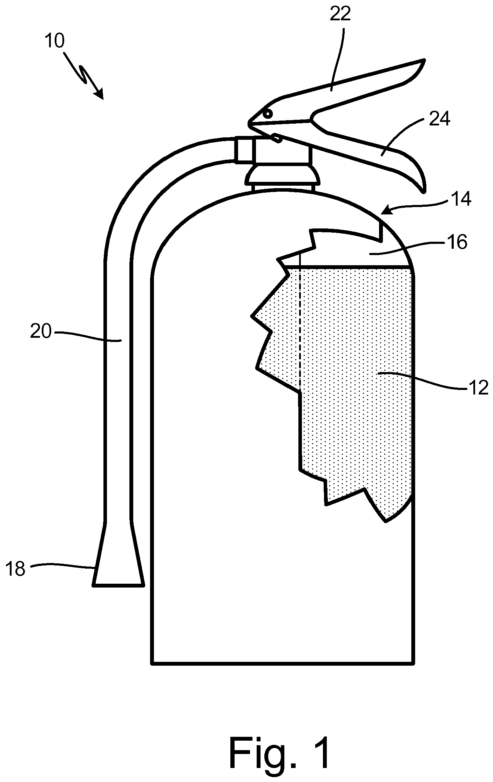

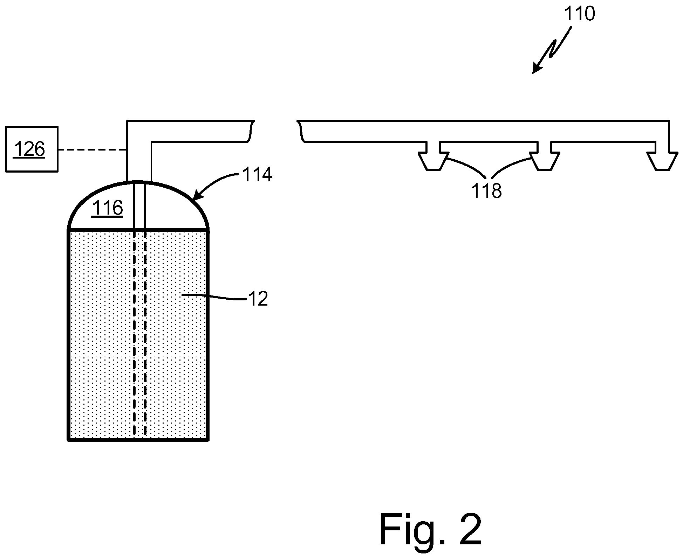

FIGS. 1 and 2 are simplified schematic illustrations of portable and fixed fire suppression systems 10 and 110, respectively. Fire suppression systems 10 and 110 include hybrid fire suppression agent 12 contained within vessels 14 and 114. Fire suppression agent 12 includes one or more dry chemical agents combined with exfoliated vermiculite particles. The vermiculite can be micronized exfoliated vermiculite (MEV), and can range from about 1 micron to 100 microns in diameter. In an exemplary embodiment, the D90 diameter (the diameter of particles occupying 90% of the total mass) is less than 70 microns, while the D50 diameter (median diameter) is less than 35 microns. Further, the concentration of the vermiculite within fire suppression agent 12 ranges from about 5% to 40% by weight, and in an exemplary embodiment, from about 5% to 15% by weight. Other particle diameter distributions and concentrations are possible, and can vary based on, for example, specific fire suppression needs, system parameters, and the particle size of the dry chemical agent. Exemplary dry chemical agents can be one or a combination of bicarbonate powders, such as sodium bicarbonate or potassium bicarbonate (e.g., "Purple K"). Other agents and combinations of agents are contemplated herein, and may be selected based on fire suppression needs and vermiculite compatibility.

In the embodiment shown in FIG. 1, vessel 14 is a pressure vessel and is configured as a portable (e.g., handheld) extinguisher. Vessel 14 includes inner volume 16 which can be partially or fully occupied by fire suppression agent 12. Vessel 14 further includes nozzle 18 connected to hose 20, handle 22, and lever 24. Fire suppression agent 12 can be discharged through hose 20 and nozzle 18 via actuation of lever 24. Nozzle 18 can also be configured without hose 20, and can further include any tap, valve, or port suitable for placing inner volume 16 in fluid communication with the environment.

In the embodiment of FIG. 2, vessel 114 is arranged as a storage tank for fixed fire suppression system 110 (e.g., in an aircraft cargo compartment or a unit load device) configured to discharge fire suppression agent 12 into an enclosed space via one or more nozzles 118. Similar to vessel 14, vessel 114 includes inner volume 116 which can be partially or fully occupied by fire suppression agent 12. Fire suppression system 110 can further include one or more sensors 126 for detecting a fire and/or automatically discharging fire suppression agent 12. Exemplary sensors can include one or a combination of smoke detectors, thermal sensors, ultraviolet sensors, and infrared sensors. Although shown with only a single vessel 114, alternative embodiments can include two or more vessels 114. Further, while vessel 114 is shown in FIG. 2 as right-side up, vessel (or vessels) 114 can alternatively be inverted.

In exemplary embodiments of systems 10 and 110, fire suppression agent 12 is stored as a mixture of the dry chemical agent and vermiculite. In alternative embodiments of systems 10 and 110, the vermiculite can be stored separately from the dry chemical agent until triggered to mix upon or just before discharge. A separate storage configuration can help extend the shelf life of the vermiculite and/or dry chemical agent, as well as to prevent potential degradation of any compound within fire suppression agent 12. Such configurations can include, for example, independent, separate storage vessels for fixed or larger systems, or a container/storage pack within a larger vessel for portable and handheld units. Any of the disclosed embodiments can further include gas generators, or be super-pressurized with nitrogen or other gases or mixtures to facilitate discharge of fire suppression agent 12.

The disclosed fire suppression agent and systems have many benefits. The vermiculite is effective against class D fires, fires involving lithium batteries, and class A fires, while the dry chemical agent is effective against class B and C fires. Besides commercial vehicles, the disclosed fire suppression agent and system can be used in other transportation industries (e.g., railroad, maritime, etc.), factories, laboratories, private residences, and more.

### Discussion of Possible Embodiments

The following are non-exclusive descriptions of possible embodiments of the present invention.

A fire suppression agent suitable for suppressing a lithium battery fire includes a bicarbonate powder and exfoliated vermiculite particles blended with the bicarbonate powder.

The fire suppression agent of the preceding paragraph can optionally include, additionally and/or alternatively, any one or more of the following features, configurations and/or additional components:
In the above fire suppression agent, a concentration of the vermiculite particles can range from 5% to 40% by weight.

In any of the above fire suppression agents, a D90 diameter of the vermiculite particles can be less than 70 microns.

In any of the above fire suppression agents, a D50 diameter of the vermiculite particles is less than 35 microns.

In any of the above fire suppression agents, the bicarbonate powder can include a compound selected from the group consisting of sodium bicarbonate, potassium bicarbonate, and combinations thereof.

Any of the above fire suppression agents can further be capable of suppressing a fire comprising at least one of a combustible nonmetal solid, a combustible fluid, and an electrical component.

A fire suppression system includes a vessel, and a fire suppression agent contained within the vessel. The fire suppression agent includes a bicarbonate powder and exfoliated vermiculite particles, and is capable of suppressing a lithium battery fire.

The fire suppression system of the preceding paragraph can optionally include, additionally and/or alternatively, any one or more of the following features, configurations and/or additional components:
The above fire suppression system is further capable of suppressing fire comprising at least one of a combustible nonmetal solid, a combustible fluid, and an electrical component.

Any of the above fire suppression systems can further include a nozzle for selectively discharging the fire suppression agent.

Any of the above fire suppression systems can further include a sensor configured to detect a fire.

In any of the above fire suppression systems, the sensor can be one of a smoke detector, thermal sensor, ultraviolet sensor, and infrared sensor.

In any of the above fire suppression systems, the vessel can be portable.

In any of the above fire suppression systems, the vessel can be incorporated into a fixed fire suppression system.

In any of the above fire suppression systems, a concentration of the vermiculite particles can range from 5% to 40% by weight.

In any of the above fire suppression systems, the bicarbonate powder can include a compound selected from the group consisting of sodium bicarbonate, potassium bicarbonate, and combinations thereof.

A method of making a fire suppression agent suitable for suppressing a lithium battery fire includes combining an amount of exfoliated vermiculite particles and a bicarbonate powder.

The method of the preceding paragraph can optionally include, additionally and/or alternatively, any one or more of the following features, configurations and/or additional components:
In the above method, a concentration of the vermiculite particles can range from 5% to 40% by weight.

In any of the above methods, the bicarbonate powder can include a compound selected from the group consisting of sodium bicarbonate, potassium bicarbonate, and combinations thereof.

In any of the above methods, the fire suppression agent is further capable of suppressing fire comprising at least one of a combustible nonmetal solid, a combustible fluid, and an electrical component.

Any of the above methods can further include adding the fire suppression agent to a vessel to form a fire suppression system.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A fire suppression agent suitable for suppressing a lithium battery fire, the fire suppression agent comprising:
a bicarbonate powder; and
exfoliated vermiculite particles blended with the bicarbonate powder.

2. The fire suppression agent of claim 1, wherein a concentration of the vermiculite particles ranges from 5% to 40% by weight.

3. The fire suppression agent of claim 1 or 2, wherein a D90 diameter of the vermiculite particles is less than 70 microns.

4. The fire suppression agent of claim 1, 2 or 3 wherein a D50 diameter of the vermiculite particles is less than 35 microns.

5. A fire suppression system comprising:
a vessel; and
a fire suppression agent contained within the vessel, the fire suppression agent comprising:
a bicarbonate powder; and
exfoliated vermiculite particles;
wherein the fire suppression agent is capable of suppressing a lithium battery fire.

6. The system of claim 5, further comprising: a nozzle for selectively discharging the fire suppression agent.

7. The system of claim 5 or 6, further comprising: a sensor configured to detect a fire.

8. The system of claim 7, wherein the sensor is one of a smoke detector, thermal sensor, ultraviolet sensor, and infrared sensor.

9. The system of any one of claims 5-8, wherein the vessel is portable.

10. The system of any one of claims 5-9, wherein the vessel is incorporated into a fixed fire suppression system.

11. A method of making a fire suppression agent suitable for suppressing a lithium battery fire, the method comprising:
combining an amount of exfoliated vermiculite particles and a bicarbonate powder.

12. The method of claim 11 and further comprising: adding the fire suppression agent to a vessel to form a fire suppression system.

13. The system or method of any one of claims 5-11, wherein a concentration of the vermiculite particles ranges from 5% to 40% by weight.

14. The fire suppression agent, system or method according to any preceding claim, wherein the bicarbonate powder comprises a compound selected from the group consisting of sodium bicarbonate, potassium bicarbonate, and combinations thereof.

15. The fire suppression agent, system or method according to any preceding claim, wherein the fire suppression agent is further capable of suppressing a fire comprising at least one of:
a combustible nonmetal solid;
a combustible fluid; and
an electrical component.
